(19) Europäisches Patentamt
European Patent Office
Office européen des brevets

(11) **EP 3 876 166 A2**

(12) **EUROPEAN PATENT APPLICATION**

(43) Date of publication:
**08.09.2021 Bulletin 2021/36**

(51) Int Cl.:
**G06N 3/08** *(2006.01)*     **G06N 3/04** *(2006.01)*
**G06N 5/00** *(2006.01)*

(21) Application number: **21180897.7**

(22) Date of filing: **22.06.2021**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **23.10.2020   CN 202011147374**

(71) Applicant: **BEIJING BAIDU NETCOM SCIENCE AND TECHNOLOGY CO. LTD.**
**100085 Beijing (CN)**

(72) Inventors:
• **XI, Teng**
  **Beijing, 100085 (CN)**
• **ZHANG, Gang**
  **Beijing, 100085 (CN)**
• **WEN, Shengzhao**
  **Beijing, 100085 (CN)**

(74) Representative: **Studio Torta S.p.A.**
**Via Viotti, 9**
**10121 Torino (IT)**

(54) **METHOD AND APPARATUS FOR DETERMINING NETWORK MODEL PRUNING STRATEGY, DEVICE AND STORAGE MEDIUM**

(57)     Embodiments of the present disclosure disclose a method and apparatus for determining a network model pruning strategy, a device and a storage medium, relate to the field of artificial intelligence technology such as computer vision and deep learning, and may be used in image processing scenarios. The method includes: generating a BN threshold search space using configuration information of the BN threshold search space for a network model for a target hardware; generating a pruning strategy code generator using the BN threshold search space; randomly generating a BN threshold code using the pruning strategy code generator; decoding the BN threshold code to obtain a candidate BN threshold; and determining a target pruning strategy of the network model for the target hardware, based on a pruning accuracy loss of the network model corresponding to the candidate BN threshold. An optimal BN threshold is obtained through automatic search, and the BN threshold is used to replace channel importance to prune the network model, thereby greatly reducing the accuracy loss of the network model after pruning.

Fig. 2

**Description**

TECHNICAL FIELD

The present disclosure relates to the field of computer technology, in particular to the field of artificial intelligence technology such as computer vision and deep learning, and may be used in image processing scenarios, and more particular to a method and apparatus for determining a network model pruning strategy, a device and a storage medium.

BACKGROUND

Deep learning technology achieves great success in many directions. In the deep learning technology, pruning of a network model has a very important impact on performance and effects of the network model.

The existing pruning strategy is based on a rank size of a matrix to rank importance of channels in a network model. For channels with lower importance, they are usually considered redundant and may be cut off to achieve an effect of compressing the network model. However, for a matrix having a small rank, its importance may not be low, after cutting the matrix off, an accuracy loss of the network model may be severe.

SUMMARY

Embodiments of the present disclosure provide a method and apparatus for determining a network model pruning strategy, a device, a storage medium, and a computer program product.

According to a first aspect, an embodiment of the present disclosure provides a method for determining a network model pruning strategy, the method including: generating a Batch Normalization (BN) threshold search space using configuration information of the BN threshold search space for a network model for a target hardware; generating a pruning strategy code generator using the BN threshold search space; randomly generating a BN threshold code using the pruning strategy code generator; decoding the BN threshold code to obtain a candidate BN threshold; and determining a target pruning strategy of the network model for the target hardware, based on a pruning accuracy loss of the network model corresponding to the candidate BN threshold.

According to second first aspect, an embodiment of the present disclosure provides an apparatus for determining a network model pruning strategy, the apparatus including: a Batch Normalization (BN) threshold search space generation module, configured to generate a BN threshold search space using configuration information of the BN threshold search space for a network model for a target hardware; a coding module, configured to generate a pruning strategy code generator using the BN threshold search space; a BN threshold code generation module, configured to randomly generate a BN threshold code using the pruning strategy code generator; a decoding module, configured to decode the BN threshold code to obtain a candidate BN threshold; and a target pruning strategy determination module, configured to determine a target pruning strategy of the network model for the target hardware, based on a pruning accuracy loss of the network model corresponding to the candidate BN threshold.

According to third first aspect, an embodiment of the present disclosure provides an electronic device, including: at least one processor; and a memory, communicatively connected to the at least one processor. The memory stores instructions executable by the at least one processor, the instructions, when executed by the at least one processor, cause the at least one processor to perform the method according to any implementation in the first aspect.

According to fourth first aspect, an embodiment of the present disclosure provides a non-transitory computer readable storage medium, storing computer instructions, the computer instructions, being used to cause the computer to perform the method according to any implementation in the first aspect.

According to fifth first aspect, an embodiment of the present disclosure provides a computer program product, including a computer program. The computer program, when executed by a processor, implements the method according to any implementation in the first aspect.

The method and apparatus for determining a network model pruning strategy, the device and the storage medium provided by the embodiments of the present disclosure, first generate a BN threshold search space using configuration information of the BN threshold search space for a network model for a target hardware; secondly generate a pruning strategy code generator using the BN threshold search space; then randomly generate a BN threshold code using the pruning strategy code generator; then decode the BN threshold code to obtain a candidate BN threshold; and finally determine a target pruning strategy of the network model for the target hardware, based on a pruning accuracy loss of the network model corresponding to the candidate BN threshold. In this way, an optimal BN threshold is obtained through automatic search, and the BN threshold is used to replace channel importance to prune the network model, thereby greatly reducing the accuracy loss of the network model after pruning.

It should be understood that the content described in this section is not intended to identify key or important features of the embodiments of the present disclosure, nor is it intended to limit the scope of the present disclosure. Other features of the present disclosure will be easily understood by the following description.

BRIEF DESCRIPTION OF THE DRAWINGS

By reading the detailed description of non-limiting embodiments with reference to following accompanying drawings, other features, objectives and advantages of the present disclosure will become more apparent.

Fig. 1 is an example system architecture diagram to which embodiments of the present disclosure may be implemented;

Fig. 2 is a schematic flowchart of a method for determining a network model pruning strategy according to an embodiment of the present disclosure;

Fig. 3 is a schematic diagram of an application scenario of the method for determining a network model pruning strategy according to an embodiment of the present disclosure;

Fig. 4 is a schematic structural diagram of an apparatus for determining a network model pruning strategy according to an embodiment of the present disclosure; and

Fig. 5 is a block diagram of an electronic device used to implement the method for determining a network model pruning strategy in some embodiments of the present disclosure.

DETAILED DESCRIPTION OF EMBODIMENTS

The present disclosure will be further described in detail below with reference to accompanying drawings and embodiments. It may be understood that the embodiments described herein are only used to explain the relevant disclosure, but not to limit the disclosure. In addition, it should be noted that, for ease of description, only the parts related to the relevant disclosure are shown in the accompanying drawings.

It should be noted that embodiments in the present disclosure and the features in the embodiments may be combined with each other on a non-conflict basis. The present disclosure will be described below in detail with reference to the accompanying drawings and in combination with the embodiments.

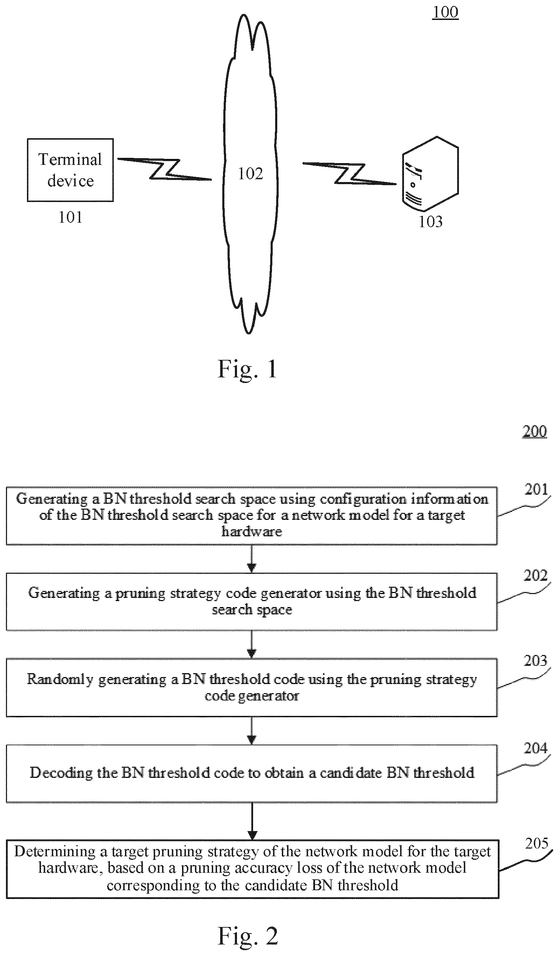

Fig. 1 shows an example system architecture 100 to which embodiments of a method for determining a network model pruning strategy or an apparatus for determining a network model pruning strategy of the present disclosure may be implemented.

As shown in Fig. 1, the system architecture 100 may include a terminal device 101, a network 102, and a server 103. The network 102 is used to provide a communication link medium between the terminal device 101 and the server 103. The network 102 may include various connection types, such as wired, wireless communication links, or optic fibers.

The terminal device 101 may interact with the server 103 through the network 102. The terminal device 101 may provide configuration information of a BN (Batch Normalization) threshold search space for a target hardware, including but not limited to a database, a user terminal, and so on.

The server 103 may provide various services. For example, the server 103 may process such as analyze data such as the configuration information of the BN threshold search space for the target hardware acquired from the terminal device 101, and generate a processing result (for example, a target pruning strategy for the target hardware).

It should be noted that the server 103 may be hardware or software. When the server 103 is hardware, it may be implemented as a distributed server cluster composed of a plurality of servers, or as a single server. When the server 103 is software, it may be implemented as a plurality of pieces of software or a plurality of software modules (for example, to provide distributed services), or may be implemented as a single piece of software or a single software module, which is not limited herein.

It should be noted that the method for determining a network model pruning strategy provided in embodiments of the present disclosure is generally performed by the server 103. Correspondingly, the apparatus for determining a network model pruning strategy is generally provided in the server 103.

It should be understood that the number of terminal devices, networks, and servers in Fig. 1 is merely illustrative. Depending on the implementation needs, there may be any number of terminal devices, networks, and servers.

With further reference to Fig. 2, illustrating a flow 200 of a method for determining a network model pruning strategy according to an embodiment of the present disclosure. The method includes the following steps.

Step 201, generating a BN threshold search space using configuration information of the BN threshold search space for a network model for a target hardware.

In the present embodiment, an executing body (for example, the server 103 shown in Fig. 1) of the method for determining a network model pruning strategy may generate the BN threshold search space using the configuration information of the BN threshold search space for the network model for the target hardware.

The configuration information of the BN threshold search space for the target hardware may be information set by a user and used to determine the BN threshold search space. Batch Normalization is also called BN, and the process is as follows: assuming that input batch data is $z_{in}$, then an output $z_{out}$ of the batch data after BN is:

$$\hat{z} = \frac{z_{in} - \mu_B}{\sqrt{\sigma_B^2 + \epsilon}}; \qquad z_{out} = \gamma \hat{z} + \beta$$

$\mu_B$ is a mean value of the batch data, $\sigma_B^2$ is a variance of the batch data, $\hat{x}$ is to normalize each element in the batch data, and $\gamma$ and $\beta$ represent an expansion parameter and a translation parameter of learning, respectively. Here, a value of the expansion parameter $\gamma$ is a BN value, and the smaller the BN value corresponding to a channel in the network model, the lower the importance of the channel. To this end, by setting a BN threshold, channels below the set BN threshold may be cut off, so as to compress the network model without reducing an accuracy of the network model.

The BN threshold search space includes BN threshold information and channel location information. The BN threshold information may be a threshold of each gear. For example, a range of the BN threshold is [1, 10], and the BN threshold is discrete. Then, based on a predefined BN threshold granularity value of 0.01, BN thresholds of 1000 gears may be generated. In the present embodiment, the BN threshold may also be a continuous value. If the BN threshold is a continuous value, a BN threshold gear of a continuous interval may be determined based on a search algorithm such as Bayesian estimation.

The channel location information may be channel location information in the network model applied to the target hardware. In convolutional neural networks, the channel is a convolution kernel in a convolutional layer, and the number of output channels corresponds to the number of convolution kernels.

The pruning strategy may be determined by the BN threshold information and the channel location information. For example, if there are a total of 5 channels in a network model, and there are 10 gears of BN thresholds, then 10 gears of BN thresholds may be set for each channel, so a total of 100,000 pruning strategies may be formed. For example, the BN threshold of the corresponding gear may be set for each channel in the network model.

From the BN threshold search space, a pruning strategy consisting of any gear BN threshold and any channel may be searched. These pruning strategies may be pruning strategies known in the existing art, or may be a fitting of existing pruning strategies.

Step 202, generating a pruning strategy code generator using the BN threshold search space.

In the present embodiment, the executing body may generate the pruning strategy code generator using the BN threshold search space.

Coding the BN threshold search space may be coding the BN threshold of any gear and any channel location in the search space. For example, assuming that there are 10 gears of BN thresholds in the search space, and there are 5 different channel locations. Then, the BN threshold of each gear may be coded, to obtain 10 coded values corresponding to the BN thresholds of 10 gears. Simultaneously coding 5 different channel locations may obtain 5 coded values corresponding to the 5 different channel locations. Since each channel location may have 10 gears of BN thresholds to choose from, the search space may have 100,000 different pruning strategies. Each pruning strategy has a unique coded value corresponding to it, so that the pruning strategy code generator may be obtained.

By coding the BN threshold and the channel information in the search space, the pruning strategy may be converted into a computer-recognizable language, so that an automatic machine search for the pruning strategy may be realized.

Step 203, randomly generating a BN threshold code using the pruning strategy code generator.

In the present embodiment, the executing body may randomly generate the BN threshold code using the pruning strategy code generator.

The pruning strategy code generator may randomly generate a set of codes that represent the BN threshold and the channel corresponding to each BN threshold. For example, the generated set of BN threshold codes is [1][2][3][4], where [1] may represent that a first channel uses a BN threshold of a first gear, and [2] may represent that a second channel uses a BN threshold of a second gear, and so on. The set of BN threshold codes represents a pruning strategy.

Step 204, decoding the BN threshold code to obtain a candidate BN threshold.

In the present embodiment, the executing body may decode the BN threshold code to obtain the candidate BN threshold. Since each BN threshold code may correspond to the only one-gear BN threshold, after decoding the gear of BN threshold code, a set of candidate BN thresholds may be obtained. Each decoded BN threshold contains the corresponding channel information. The existing coding/decoding technology may be used to realize the coding and decoding of the BN threshold.

Step 205, determining a target pruning strategy of the network model for the target hardware, based on a pruning accuracy loss of the network model corresponding to the candidate BN threshold.

In the present embodiment, the executing body may determine the target pruning strategy of the network model for the target hardware, based on the pruning accuracy loss of the network model corresponding to the candidate BN threshold.

First, a training script (such as a network structure, an initial parameter, an activation function, or a loss function) of the network model applied to the target hardware may be acquired. Then, the training script is executed on a training set to train the network model. Subsequently, each channel in the trained network model is pruned using the candidate BN threshold, and an effect (such as accuracy loss) of the pruned network model is tested on a verification set. If a result of the test meets the requirements, a pruning strategy corresponding to the candidate BN threshold may be determined as the target pruning strategy. For example, assuming that the generated candidate BN threshold is the BN threshold of each channel being 0.01, then the BN value of each channel in the network model may be compared with the candidate BN threshold. If the BN value of a certain channel is less than the candidate BN threshold, this channel is cut off, and so on, and the pruned network model is finally obtained. Then, the effect (such as accuracy loss) of the pruned network model is tested on the verification set. If the result of the test meets the requirements, the pruning strategy corresponding to the candidate BN threshold may be determined as the target pruning strategy.

The method for determining a network model pruning strategy provided by the above embodiment of the present disclosure, may obtain an optimal BN threshold through automatic search, and use the BN threshold to replace channel importance to prune the network model, thereby greatly reducing the accuracy loss of the network model after pruning.

In some alternative implementation of the present embodiments, the above step 205 further includes: determining, in response to the pruning accuracy loss of the network model of the candidate BN threshold being less than a predetermined threshold, the candidate BN threshold as the target pruning strategy for the target hardware.

Specifically, it includes the following steps: pruning the network model for the target hardware based on the candidate BN threshold; assessing the accuracy loss of the pruned network model; determining, in response to the pruning accuracy loss of the network model being less than a predetermined threshold, the candidate BN threshold as the target pruning strategy for the target hardware. In the present embodiment, by setting a termination condition (the accuracy loss of the network model is less than the predetermined threshold) of the BN threshold automatic search, it may realize automatically finding a BN threshold that meets the requirements.

In some alternative implementations of the present embodiment, the above step 205 further includes: generating, in response to the pruning accuracy loss of the network model of the candidate BN threshold being greater than the predetermined threshold, a new set of BN threshold codes using the pruning strategy code generator, and decoding the new set of BN threshold codes to obtain a new candidate BN threshold; and determining the target pruning strategy for the target hardware, based on a pruning accuracy loss corresponding to the new candidate BN threshold.

Specifically, it includes the following steps: pruning the network model for the target hardware based on the candidate BN threshold; assessing the accuracy loss of the pruned network model; generating, in response to the pruning accuracy loss of the network model being greater than the predetermined threshold, the new set of BN threshold codes based on the pruning strategy code generator, and decoding the new set of BN threshold codes to obtain the new candidate BN threshold; and determining the target pruning strategy for the target hardware, based on the pruning accuracy loss corresponding to the new candidate BN threshold. In the present embodiment, by setting a loop condition (the accuracy loss of the network model is greater than the predetermined threshold) of the BN threshold automatic search, the optimal target pruning strategy may be found from the BN threshold search space. Preferably, a termination condition may also be set for the loop condition of the BN threshold automatic search, for example, the number of updates of the pruning strategy code generator reaches a predetermined threshold. Each time the pruning strategy code generator is updated, a new set of BN threshold codes may be generated.

In some alternative implementations of the present embodiment, the candidate BN threshold includes a continuous BN threshold and a discrete BN threshold. The method for determining a network model pruning strategy provided in the present embodiment may be applied to either the continuous BN threshold or the discrete BN threshold. If it is a discrete BN threshold, the BN thresholds of different gears may be set according to a predefined threshold granularity. If it is a continuous BN threshold, algorithms such as Bayesian estimation may be used to set BN threshold gears in different intervals.

In some alternative implementations of the present embodiment, in the case that the user's terminal device has corresponding device processing capabilities, the executing body may return the target pruning strategy to the user's terminal device. In this regard, the user's terminal device may first acquire a training sample set, and use the training sample set for training to obtain an initial model, and then use the target pruning strategy to prune the initial model to obtain a target model.

In the case that the user's terminal device does not have the corresponding device processing capabilities, the executing body may acquire the training sample set, and use the training sample set for training to obtain an initial model, and then use the target pruning strategy to prune the initial model to obtain a target model. Then, the executing body may return the target pruning strategy and the target model to the user's terminal device together.

It is worth mentioning that the initial model in the present embodiment may be any kind of artificial neural network model, including but not limited to classification model, recognition model, detection model, and so on. A running speed and accuracy of the target model using the target pruning strategy in the embodiments of the present disclosure are all improved on the target hardware, thereby enhancing product competitiveness of the target model and the target hardware. At the same time, under the same accuracy, using the target model may reduce product costs and increase a hardware benefit. The initial model may be an image processing model applied to the target hardware. The target pruning strategy in the embodiments of the present disclosure is used to prune the image processing model, may significantly improve an accuracy of the image processing model, which is equivalent to using a smaller model to achieve the same accuracy, that is, significantly improve speed of the image processing model. The hardware benefit is that the image processing model may process images faster on the hardware, reduce the product costs, and enhance core competitiveness of the product.

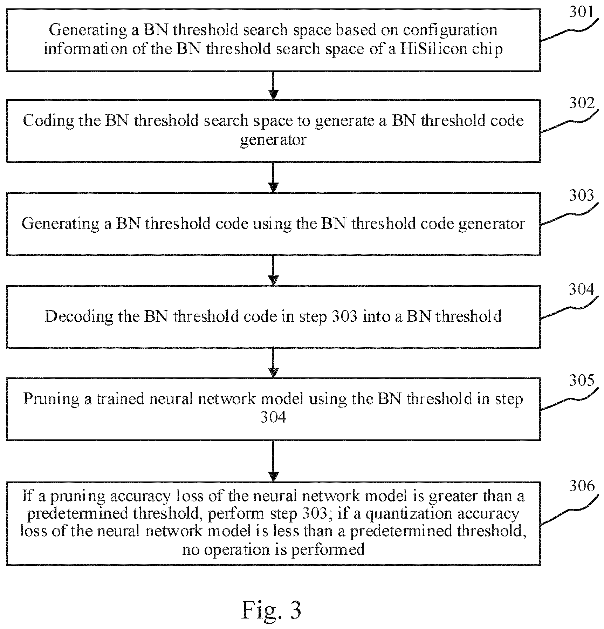

For ease of understanding, the following provides an application scenario that may implement the method for determining a network model pruning strategy according to an embodiment of the present disclosure, as shown in Fig. 3, the following steps are included.

Step 301: generating a BN threshold search space based on configuration information of the BN threshold search space of a HiSilicon chip.

Step 302: coding the BN threshold search space to generate a BN threshold code generator.

Step 303: generating a BN threshold code using the BN threshold code generator.

Step 304: decoding the BN threshold code in step 303 into a BN threshold.

Step 305: pruning a trained neural network model using the BN threshold in step 304.

Step 306: if a pruning accuracy loss of the neural network model is greater than a predetermined threshold, perform step 303; if a quantization accuracy loss of the neural network model is less than a predetermined threshold, no operation is performed.

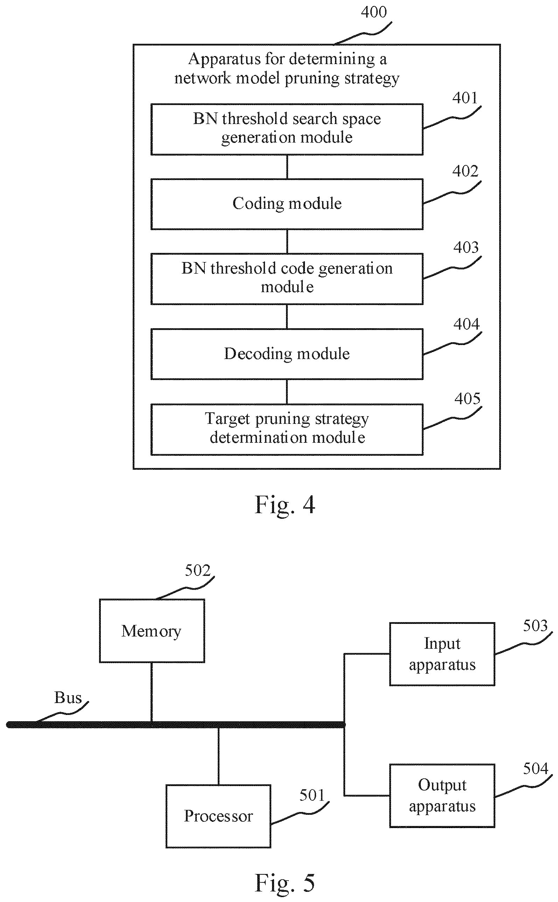

With further reference to Fig. 4, as an implementation of the method shown in the above figures, an embodiment of the present disclosure provides an apparatus for determining a network model pruning strategy, and the apparatus embodiment corresponds to the method embodiment as shown in Fig. 2. The apparatus may be specifically applied to various electronic devices.

As shown in Fig. 4, an apparatus 400 for determining a network model pruning strategy of the present embodiment may include: a BN threshold search space generation module 401, a coding module 402, a BN threshold code generation module 403, a decoding module 404 and a target pruning strategy determination module 405. The BN threshold search space generation module 401 is configured to generate a BN threshold search space using configuration information of the BN threshold search space for a network model for a target hardware. The coding module 402 is configured to generate a pruning strategy code generator using the BN threshold search space. The BN threshold code generation module 403 is configured to randomly generate a BN threshold code using the pruning strategy code generator. The decoding module 404 is configured to decode the BN threshold code to obtain a candidate BN threshold. The target pruning strategy determination module 405 is configured to determine a target pruning strategy of the network model for the target hardware, based on a pruning accuracy loss of the network model corresponding to the candidate BN threshold.

In the present embodiment, in the apparatus 400 for determining a network model pruning strategy, for the specific processing and technical effects of the BN threshold search space generation module 401, the coding module 402, the BN threshold code generation module 403, the decoding module 404 and the target pruning strategy determination module 405, reference may be made to the relevant description of steps 201-205 in the corresponding embodiment of Fig. 2 respectively, and detailed description thereof will be omitted.

In some alternative implementations of the present embodiment, the target pruning strategy determination module is further configured to: determine, in response to the pruning accuracy loss of the network model of the candidate BN threshold being less than a predetermined threshold, the candidate BN threshold as the target pruning strategy for the target hardware.

In some alternative implementations of the present embodiment, the target pruning strategy determination module is further configured to: generate, in response to the pruning accuracy loss of the network model of the candidate BN threshold being greater than the predetermined threshold, a new set of BN threshold codes using the pruning strategy code generator, and decode the new set of BN threshold codes to obtain a new candidate BN threshold; and determine the target pruning strategy for the target hardware, based on a pruning accuracy loss corresponding to the new candidate BN threshold.

In some alternative implementations of the present embodiment, the candidate BN threshold includes a continuous BN threshold and a discrete BN threshold.

In some alternative implementations of the present embodiment, the apparatus further includes: a training sample acquisition module, configured to acquire a training sample set; an initial model training module, configured to train the network model for the target hardware using the training sample set to obtain an initial model; and an initial model quantization module, configured to prune the initial model using the target pruning strategy to obtain a target model.

In some alternative implementations of the present embodiment, the BN threshold is an expansion coefficient of data after batch normalization.

An embodiment of the present disclosure provides a computer program product, including a computer program. The computer program, when executed by a processor, implements the method for determining a network model pruning strategy according to any embodiment as described above.

As shown in Fig. 5, is a block diagram of an electronic device of the method for determining a network model pruning strategy according to some embodiments of the present disclosure. The electronic device is intended to represent various forms of digital computers, such as laptop computers, desktop computers, workbenches, personal digital assistants, servers, blade servers, mainframe computers, and other suitable computers. The electronic device may also represent various forms of mobile apparatuses, such as personal digital processors, cellular phones, smart phones, wearable devices, and other similar computing apparatuses. The components shown herein, their connections and relationships, and their functions are merely examples, and are not intended to limit the implementation of the present disclosure described and/or claimed herein.

As shown in Fig. 5, the electronic device includes: one or more processors 501, a memory 502, and interfaces for connecting various components, including high-speed interfaces and low-speed interfaces. The various components are connected to each other using different buses, and may be installed on a common motherboard or in other methods as needed. The processor may process instructions executed within the electronic device, including instructions stored in or on the memory to display graphic information of GUI on an external input/output apparatus (such as a display device coupled to the interface). In other embodiments, a plurality of processors and/or a plurality of buses may be used together with a plurality of memories and a plurality of memories if desired. Similarly, a plurality of electronic devices may be connected, and the devices provide some necessary operations (for example, as a server array, a set of blade servers, or a multi-processor system). In Fig. 5, one processor 501 is used as an example.

The memory 502 is a non-transitory computer readable storage medium provided by the present disclosure. The memory stores instructions executable by at least one processor, so that the at least one processor performs the method for determining a network model pruning strategy provided by the present disclosure. The non-transitory computer readable storage medium of the present disclosure stores computer instructions for causing a computer to perform the method for determining a network model pruning strategy provided by the present disclosure.

The memory 502, as a non-transitory computer readable storage medium, may be used to store non-transitory software programs, non-transitory computer executable programs and modules, such as program instructions/modules corresponding to the method for determining a network model pruning strategy in the embodiments of the present disclosure (for example, the BN threshold search space generation module 401, the coding module 402, the BN threshold code generation module 403, the decoding module 404 and the target pruning strategy determination module 405 as shown in Fig. 4). The processor 501 executes the non-transitory software programs, instructions, and modules stored in the memory 502 to execute various functional applications and data processing of the server, that is, to implement the method for determining a network model pruning strategy in the foregoing method embodiments.

The memory 502 may include a storage program area and a storage data area, where the storage program area may store an operating system and at least one function required application program; and the storage data area may store data created by the use of the electronic device according to the method for determining a network model pruning strategy, etc. In addition, the memory 502 may include a high-speed random access memory, and may also include a non-transitory memory, such as at least one magnetic disk storage device, a flash memory device, or other non-transitory solid-state storage devices. In some embodiments, the memory 502 may optionally include memories remotely provided with respect to the processor 501, and these remote memories may be connected to the electronic device of the method for detecting a target object through a network. Examples of the above network include but are not limited to the Internet, intranet, local area network, mobile communication network, and combinations thereof.

The electronic device of the method for determining a network model pruning strategy may further include: an input apparatus 503 and an output apparatus 504. The processor 501, the memory 502, the input apparatus 503, and the output apparatus 504 may be connected through a bus or in other methods. In Fig. 5, connection through a bus is used as an example.

The input apparatus 503 may receive input digital or character information, and generate key signal inputs related to user settings and function control of the electronic device of the method for determining a network model pruning strategy, such as touch screen, keypad, mouse, trackpad, touchpad, pointing stick, one or more mouse buttons, trackball, joystick and other input apparatuses. The output apparatus 604 may include a display device, an auxiliary lighting apparatus (for example, LED), a tactile feedback apparatus (for example, a vibration motor), and the like. The display device may include, but is not limited to, a liquid crystal display (LCD), a light emitting diode (LED) display, and a plasma display. In some embodiments, the display device may be a touch screen.

Various embodiments of the systems and technologies described herein may be implemented in digital electronic circuit systems, integrated circuit systems, dedicated ASICs (application specific integrated circuits), computer hardware, firmware, software, and/or combinations thereof. These various embodiments may include: being implemented in one or more computer programs that can be executed and/or interpreted on a programmable system that includes at least one programmable processor. The programmable processor may be a dedicated or general-purpose programmable processor, and may receive data and instructions from a storage system, at least one input apparatus, and at least one output apparatus, and transmit the data and instructions to the storage system, the at least one input apparatus, and the at least one output apparatus.

These computing programs (also referred to as programs, software, software applications, or codes) include machine instructions of the programmable processor and may use high-level processes and/or object-oriented programming languages, and/or assembly/machine languages to implement these computing programs. As used herein, the terms "machine readable medium" and "computer readable medium" refer to any computer program product, device, and/or apparatus (for example, magnetic disk, optical disk, memory, programmable logic apparatus (PLD)) used to provide machine instructions and/or data to the programmable processor, including machine readable medium that receives machine instructions as machine readable signals. The term "machine readable signal" refers to any signal used to provide machine instructions and/or data to the programmable processor.

In order to provide interaction with a user, the systems and technologies described herein may be implemented on a computer, the computer has: a display apparatus for displaying information to the user (for example, CRT (cathode ray tube) or LCD (liquid crystal display) monitor); and a keyboard and a pointing apparatus (for example, mouse or trackball), and the user may use the keyboard and the pointing apparatus to provide input to the computer. Other types of apparatuses may also be used to provide interaction with the user; for example, feedback provided to the user may be any form of sensory feedback (for example, visual feedback, auditory feedback, or tactile feedback); and any form (including acoustic input, voice input, or tactile input) may be used to receive input from the user.

The systems and technologies described herein may be implemented in a computing system that includes backend components (e.g., as a data server), or a computing system that includes middleware components (e.g., application server), or a computing system that includes frontend components (for example, a user computer having a graphical user interface or a web browser, through which the user may interact with the implementations of the systems and the technologies described herein), or a computing system that includes any combination of such backend components, middleware components, or frontend components. The components of the system may be interconnected by any form or medium of digital data communication (e.g., communication network). Examples of the communication network include: local area networks (LAN), wide area networks (WAN), the Internet, and blockchain networks.

The computer system may include a client and a server. The client and the server are generally far from each other and usually interact through the communication network. The relationship between the client and the server is generated by computer programs that run on the corresponding computer and have a client-server relationship with each other.

The technical solution according to the present disclosure may first generate a BN threshold search space using configuration information of the BN threshold search space for a network model for a target hardware;

secondly generate a pruning strategy code generator using the BN threshold search space; then randomly generate a BN threshold code using the pruning strategy code generator; then decode the BN threshold code to obtain a candidate BN threshold; and finally determine a target pruning strategy of the network model for the target hardware, based on a pruning accuracy loss of the network model corresponding to the candidate BN threshold. In this way, an optimal BN threshold is obtained through automatic search, and the BN threshold is used to replace channel importance to prune the network model, thereby greatly reducing the accuracy loss of the network model after pruning.

It should be understood that the various forms of processes shown above may be used to reorder, add, or delete steps. For example, the steps described in the present disclosure may be performed in parallel, sequentially, or in different orders. As long as the desired results of the technical solution disclosed in the present disclosure can be achieved, no limitation is made herein.

The above specific embodiments do not constitute limitation on the protection scope of the present disclosure. Those skilled in the art should understand that various modifications, combinations, sub-combinations and substitutions may be made according to design requirements and other factors. Any modification, equivalent replacement and improvement made within the spirit and principle of the present disclosure shall be included in the protection scope of the present disclosure.

**Claims**

1. A method for determining a network model pruning strategy, the method comprising:

   generating (201) a Batch Normalization, BN, threshold search space using configuration information of the BN threshold search space for a network model for a target hardware;
   generating (202) a pruning strategy code generator using the BN threshold search space;
   randomly generating (203) a BN threshold code using the pruning strategy code generator;
   decoding (204) the BN threshold code to obtain a candidate BN threshold; and
   determining (205) a target pruning strategy of the network model for the target hardware, based on a pruning accuracy loss of the network model corresponding to the candidate BN threshold.

2. The method according to claim 1, wherein the determining a target pruning strategy of the network model for the target hardware, based on a pruning accuracy loss of the network model corresponding to the candidate BN threshold, comprises:
   determining, in response to the pruning accuracy loss of the network model of the candidate BN threshold being less than a predetermined threshold, the candidate BN threshold as the target pruning strategy for the target hardware.

3. The method according to claim 1 or 2, wherein the determining a target pruning strategy of the network model for the target hardware, based on a pruning accuracy loss of the network model corresponding to the candidate BN threshold, comprises:

    generating, in response to the pruning accuracy loss of the network model of the candidate BN threshold being greater than the predetermined threshold, a new set of BN threshold codes using the pruning strategy code generator, and decoding the new set of BN threshold codes to obtain a new candidate BN threshold; and
    determining the target pruning strategy for the target hardware, based on a pruning accuracy loss corresponding to the new candidate BN threshold.

4. The method according to any one of claims 1-3, wherein the candidate BN threshold comprises a continuous BN threshold and a discrete BN threshold.

5. The method according to any one of claims 1-4, further comprising:

    acquiring a training sample set;
    training the network model for the target hardware using the training sample set to obtain an initial model; and
    pruning the initial model using the target pruning strategy to obtain a target model.

6. The method according to any one of claims 1-5, wherein the BN threshold is an expansion coefficient of data after batch normalization.

7. An apparatus for determining a network model pruning strategy, the apparatus comprising:

    a Batch Normalization, BN, threshold search space generation module (401), configured to generate a BN threshold search space using configuration information of the BN threshold search space for a network model for a target hardware;
    a coding module (402), configured to generate a pruning strategy code generator using the BN threshold search space;
    a BN threshold code generation module (403), configured to randomly generate a BN threshold code using the pruning strategy code generator;
    a decoding module (404), configured to decode the BN threshold code to obtain a candidate BN threshold; and
a target pruning strategy determination module (405), configured to determine a target pruning strategy of the network model for the target hardware, based on a pruning accuracy loss of the network model corresponding to the candidate BN threshold.

8. The apparatus according to claim 7, wherein the target pruning strategy determination module (405) is further configured to:
determine, in response to the pruning accuracy loss of the network model of the candidate BN threshold being less than a predetermined threshold, the candidate BN threshold as the target pruning strategy for the target hardware.

9. The apparatus according to claim 7 or 8, wherein the target pruning strategy determination module (405) is further configured to:

    generate, in response to the pruning accuracy loss of the network model of the candidate BN threshold being greater than the predetermined threshold, a new set of BN threshold codes using the pruning strategy code generator, and decode the new set of BN threshold codes to obtain a new candidate BN threshold; and
    determine the target pruning strategy for the target hardware, based on a pruning accuracy loss corresponding to the new candidate BN threshold.

10. The apparatus according to any one of claims 7-9, wherein the candidate BN threshold comprises a continuous BN threshold and a discrete BN threshold.

11. The apparatus according to any one of claims 7-10, further comprising:

    a training sample acquisition module, configured to acquire a training sample set;
    an initial model training module, configured to train the network model for the target hardware using the training sample set to obtain an initial model; and
    an initial model quantization module, configured to prune the initial model using the target pruning strategy to obtain a target model.

12. The apparatus according to any one of claims 7-11, wherein the BN threshold is an expansion coefficient of data after batch normalization.

13. An electronic device, comprising:

at least one processor (501); and
a memory (502), communicatively connected to the at least one processor;
wherein the memory (502) stores instructions executable by the at least one processor (501), the instructions, when executed by the at least one processor (501), cause the at least one processor to perform the method according to any one of claims 1-6.

14. A non-transitory computer readable storage medium, storing computer instructions, the computer instructions, being used to cause the computer to perform the method according to any one of claims 1-6.

15. A computer program product, comprising a computer program, wherein the computer program, when executed by a processor, implements the method according to any one of claims 1-6.

Fig. 1

200

| Generating a BN threshold search space using configuration information of the BN threshold search space for a network model for a target hardware | 201 |

↓

| Generating a pruning strategy code generator using the BN threshold search space | 202 |

↓

| Randomly generating a BN threshold code using the pruning strategy code generator | 203 |

↓

| Decoding the BN threshold code to obtain a candidate BN threshold | 204 |

↓

| Determining a target pruning strategy of the network model for the target hardware, based on a pruning accuracy loss of the network model corresponding to the candidate BN threshold | 205 |

Fig. 2

Generating a BN threshold search space based on configuration information of the BN threshold search space of a HiSilicon chip — 301

Coding the BN threshold search space to generate a BN threshold code generator — 302

Generating a BN threshold code using the BN threshold code generator — 303

Decoding the BN threshold code in step 303 into a BN threshold — 304

Pruning a trained neural network model using the BN threshold in step 304 — 305

If a pruning accuracy loss of the neural network model is greater than a predetermined threshold, perform step 303; if a quantization accuracy loss of the neural network model is less than a predetermined threshold, no operation is performed — 306

Fig. 3

400

Apparatus for determining a
network model pruning strategy

BN threshold search space
generation module — 401

Coding module — 402

BN threshold code generation
module — 403

Decoding module — 404

Target pruning strategy
determination module — 405

Fig. 4

502

Memory

503

Input
apparatus

Bus

Processor — 501

504

Output
apparatus

Fig. 5